Europäisches Patentamt

(19) European Patent Office

Office européen des brevets

(11) Numéro de publication: **0 162 777**

**B1**

(12) **FASCICULE DE BREVET EUROPÉEN**

(45) Date de publication du fascicule du brevet:
**03.02.88**

(21) Numéro de dépôt: **85400939.6**

(22) Date de dépôt: **14.05.85**

(51) Int. Cl.⁴: **C 01 B 11/02**

(54) **Dispositif et procédé pour la production de dioxyde de chlore à partir de chlorate.**

(30) Priorité: **21.05.84 FR 8407876**

(43) Date de publication de la demande:
**27.11.85 Bulletin 85/48**

(45) Mention de la délivrance du brevet:
**03.02.88 Bulletin 88/5**

(84) Etats contractants désignés:
**BE CH DE LI**

(56) Documents cité:
**CA-A-871 614**
**US-A-3 516 790**
**US-A-3 895 100**

(73) Titulaire: **KREBS & CO. S.A. Société anonyme dite:, 8 rue J.P. Timbaud, F-78390 Bois- d'Arcy (FR)**

(72) Inventeur: **Ropars, Yves, Résidence Le Viaduc 13, Rue J. Cartier, F-78190 Montigny- le- Bretonneux (FR)**

(74) Mandataire: **Combe, André, CABINET BEAU DE LOMENIE 55, rue d'Amsterdam, F-75008 Paris (FR)**

## Description

Le dioxyde de chlore se prépare industriellement à partir d'un chlorate alcalin (chlorate de sodium en général) sur lequel on fait réagir un acide fort et un réducteur. Dans certains procédés l'acide et le réducteur sont un seul et même composé, à savoir l'acide chlorhydrique; dans d'autres procédés, l'acide est de l'acide sulfurique et le réducteur peut être le chlorure de sodium, l'anhydride sulfureux, le méthanol ou l'eau oxygénée.

Ces différents procédés présentent des caractéristiques communes - au niveau de leur mise en oeuvre - qui proviennent des propriétés particulières du dioxyde de chlore que l'on peut résumer comme suit: caractère volatil du dioxyde de chlore qui implique un dégagement gazeux de ce produit dans le milieu liquide où il est préparé, instabilité du dioxyde de chlore qui implique d'une part une préparation de ce composé à une température assez basse (par exemple de l'ordre de 20 à 40°C) d'autre part la nécessité de diluer le dioxyde produit avec un gaz inerte tel que l'air ou l'azote. Compte tenu de ces difficultés technologiques, on a présenté des dispositifs relativement complexes pour la préparation du dioxyde de chlore comme par exemple le dispositif décrit dans le brevet US 3 516 790.

La présente invention vise un dispositif pour réaliser industriellement la préparation du dioxyde de chlore à partir d'un chlorate alcalin par action d'un acide et d'un réducteur avec dilution du dioxyde obtenu par un gaz inerte, ledit dispositif étant composé:

- d'un réacteur 1, à recirculation du liquide réactif comportant à sa base une alimentation en un excès de chlorate 6 en acide 7 et en réducteur, ces différents réactifs étant soumis à un mélange par amenée in situ d'une quantité suffisante du gaz inerte 8 et comportant en tête un clapet d'évacuation 13 vers une colonne d'absorption 19 des gaz formés et une évacuation 10 du liquide réactif vers un réacteur d'épuisement 14, ledit réacteur étant proportionné de façon qu'environ 90 % de la réaction de production de dioxyde de chlore soient réalisés dans ledit réacteur

- d'un réacteur d'épuisement 14

- et d'au moins une colonne d'absorption dont la base est reliée audit réacteur et audit réacteur d'épuisement et qui comporte, d'une part, une arrivée de l'eau d'absorption et un départ de gaz et, d'autre part, une évacuation de la solution de dioxyde de chlore.

Selon l'invention, il est apparu par ailleurs que ladite colonne d'absorption était de préférence une colonne 19 de type noyée dont la base est reliée audit réacteur et audit réacteur d'épuisement, qui comporte en son sommet une arrivée 20 de l'eau d'absorption et un départ 21 de gaz et à sa base une évacuation 22 de la solution de dioxyde de chlore.

Le dispositif selon l'invention peut être utilisé dans les divers procédés connus de préparation de dioxyde de chlore, c'est-à-dire dans le procédé où l'on fait réagir le chlorate avec l'acide chlorhydrique ou les procédés où l'on fait réagir le chlorate avec l'acide sulfurique ou autre et un réducteur.

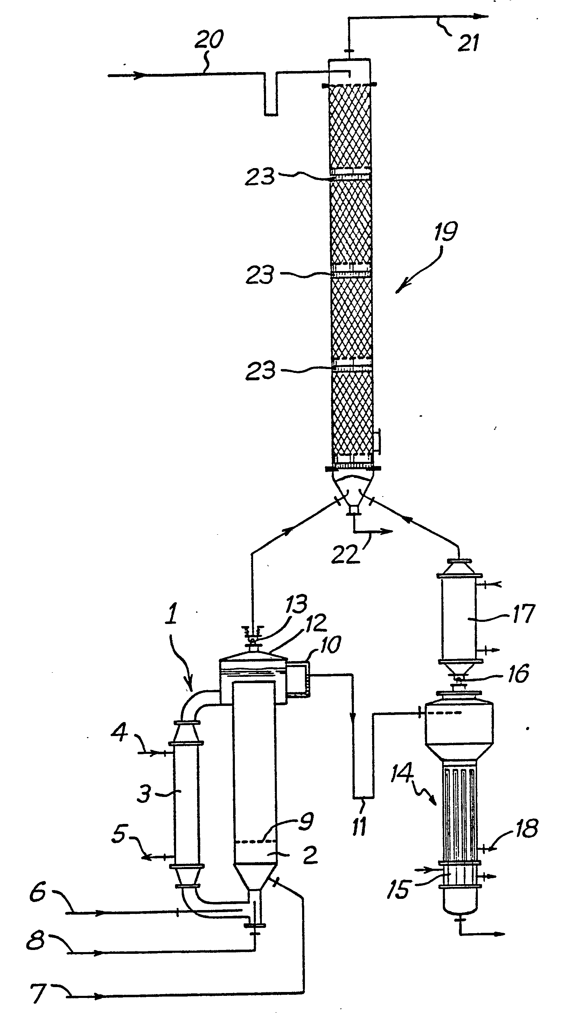

Pour la description du dispositif selon l'invention, on se référera à la figure 1 qui représente un schéma de l'installation dans le cas particulier où l'on réalise la production de dioxyde de chlore par réaction du chlorate de sodium sur l'acide chlorhydrique (ce produit agissant comme acide et réducteur). Dans cette description, on indiquera au passage non seulement certaines caractéristiques de l'appareillage, mais également les informations sur l'utilisation optimale dudit appareillage pour la réalisation de ladite réaction.

Sur la figure, on a représenté en 1 le réacteur à recirculation de liquide réactif. Ce réacteur est constitué d'une partie 2 formant le réacteur proprement dit et d'un tube de recirculation 3; ce tube 3 dont l'axe est parallèle à celui du réacteur est en communication par ses extrémités, d'une part, avec la partie haute du réacteur 2 et, d'autre part, avec la partie basse dudit réacteur 2.

Il peut être souhaitable et avantageux que le liquide de réaction soit maintenu à une température convenable, très généralement plus élevée que la normale et, dans ce cas, le chauffage du liquide s'effectue par exemple pendant sa circulation dans ledit tube 3; à cet effet on a représenté en haut et en bas du tube 3 une arrivée de vapeur 4 et un départ de liquide 5.

A la base du réacteur, on amène des quantités convenables de réactifs; dans l'exemple on amènera par la canalisation 6 un excès de chlorate de sodium et par la canalisation 7 de l'acide chlorhydrique; mais de plus, selon l'invention, le dispositif comportera une canalisation 8 par laquelle on amène une quantité suffisante de gaz inerte. Ce gaz inerte aura trois fonctions, à savoir, d'une part, réaliser à la base du réacteur un mélange très rapide et intime des réactifs, d'autre part, contribuer à la circulation du milieu liquide réactif dans le réacteur à recirculation et enfin réaliser la dilution du dioxyde de chlore formé. Dans les procédés connus, on sait que la quantité de gaz de dilution à utiliser doit être telle que le dioxyde de chlore représente environ 16 % en volume du gaz total; dans le dispositif selon l'invention, on introduira de préférence par la canalisation 8 la totalité du gaz inerte nécessaire pour obtenir une bonne dilution du dioxyde de chlore mais, dans certains cas, on pourra se contenter de n'introduire qu'une partie de ce gaz inerte, le reste étant alors introduit en tête de réacteur. Le gaz inerte utilisé est généralement de l'air. On remarquera que le chlore se conduit comme un gaz inerte dans le procédé mis en oeuvre et, par conséquent, ledit gaz inerte peut être constitué d'un mélange d'air et de chlore, lequel mélange peut provenir d'un recyclage des gaz qui s'échappent de la canalisation 21.

Les arrivées des réactifs par les canalisations 6 et 7 et de l'air par la canalisation 8 seront disposés de telle sorte qu'on assure un mélange aussi vigoureux que possible des réactifs; ce mélange peut être encore amélioré si l'on dispose, à une certaine distance de la base du réacteur, une grille représentée en 9.

Le haut du réacteur 2 est constitué par un trop-plein par lequel le liquide réactif se déverse et alimente, d'une part, le tube 3 et, d'autre part, un by-pass 10; c'est de ce by-pass 10 que sera prélevé le milieu réactionnel qui sera envoyé, par la canalisation 11, dans le réacteur d'épuisement.

Le haut du réacteur 2 comporte également un chapeau 12 surmonté d'un clapet à boule 13, lequel permet le transit du gaz de bas en haut et empêche le retour du liquide du haut vers le bas. On s'arrangera pour que le volume gazeux situé dans la partie haute du réacteur soit faible de façon à diminuer les risques inhérents à la présence dans ce volume de dioxyde de chlore.

Le réacteur 1 doit être proportionné de façon qu'environ 90 % de la réaction (compte tenu de l'excès du chlorate, ce taux de réaction correspond à la disparition d'environ 90 % de l'acide chlorhydrique introduit) se déroule dans ledit réacteur.

Grâce au dispositif selon l'invention, il a été constaté que, notamment dans le cas particulier de réaction du chlorate avec l'acide chlorhydrique, on pouvait réaliser une réaction très rapide par adaptation des conditions opératoires. Ainsi par exemple, alors que, très généralement, la réaction de l'acide chlorhydrique sur le chlorate est réalisée à une température de l'ordre de 30 à 40°C il a été trouvé que l'on pouvait sans difficulté particulière réaliser la réaction à une température de 60 à 80°C; compte tenu de l'augmentation de la vitesse de la réaction avec la température, le procédé auquel on aboutit est donc très avantageux. Ainsi également, on sait que certains catalyseurs peuvent accélérer la vitesse de réaction de l'acide chlorhydrique sur le chlorate; il a été trouvé que l'on pouvait utiliser ces catalyseurs en combinaison ou non avec les températures élevées mentionnées ci-dessus. Dans le cas d'une installation intégrée (c'est-à-dire comportant par ailleurs une unité de fabrication de chlorate par électrolyse), le catalyseur préféré est le bichromate de sodium; on a trouvé non seulement qu'il était possible dans l'installation d'utiliser ce bichromate de sodium à un degré de concentration connu (environ 3 g/l dans le réacteur) mais encore que l'on pouvait augmenter nettement la concentration en bichromate (jusqu'à environ 10 à 30 g/l) pour améliorer le rendement et la vitesse de la réaction. On aboutit là encore à un procédé nettement amélioré de fabrication de dioxyde de chlore.

Le dispositif selon l'invention comporte également en 14 un réacteur d'épuisement; ce réacteur est destiné à épuiser l'acidité résiduaire contenue dans le liquide réagissant. Cet épuisement s'effectue, de façon connue, par chauffage du liquide à sa température d'ébullition, soit environ 106°C; ce chauffage est obtenu, par exemple par utilisation de vapeur dans l'échangeur 15.

Les gaz produits et dégagés de la solution par l'élévation de température passent par un clapet à boule 16 identique au clapet à boule 13 situé au sommet du réacteur; les gaz sont ensuite condensés dans l'échangeur 17 (qui est plein de solution) par échange avec de l'eau froide.

Le liquide sort du réacteur d'épuisement par la canalisation 18.

Le dispositif comporte enfin une colonne d'absorption 19.

Cette colonne d'absorption, comportant un garnissage présente la particularité de fonctionner sous forme de colonne dite noyée, c'est-à-dire pleine d'eau; cette disposition est importante du fait qu'elle permet une plus grande sécurité que si l'on utilisait une colonne à ruissellement; en effet le volume gazeux contenant du dioxyde de chlore libre est plus faible dans le cas d'une colonne noyée que dans le cas d'une colonne à ruissellement, même en cas d'arrêt de l'alimentation en eau.

La colonne d'absorption est alimentée à sa base par les gaz provenant du clapet à boule 13 et par le mélange gaz-liquide provenant du condenseur 17; la colonne est alimentée, en tête 20 par le liquide d'absorption (généralement de l'eau); enfin, la colonne comporte en tête 21 un départ de gaz résiduaire et à sa base une évacuation 22 de la solution de dioxyde de chlore.

On peut avantageusement disposer dans ladite colonne un certain nombre de grilles 23 qui, compte tenu de la nature du milieu circulant, permettront d'éviter des remélanges internes de solutions sur l'ensemble de la colonne en réalisant un certain nombre d'étages quasi indépendants avec, à chaque étage, enrichissement du liquide circulant.

**Revendications**

1. Dispositif pour réaliser industriellement la préparation de dioxyde de chlore, à partir d'un chlorate alcalin, par action d'un acide et d'un réducteur, avec dilution du dioxyde obtenu par un gaz inerte, caractérisé en ce qu'il est composé :
- d'un réacteur (1), à recirculation du liquide réactif comportant à sa base une alimentation en un excès de chlorate (6), en acide (7) et en réducteur, ces différents réactifs étant soumis à un mélange par amenée in situ d'une quantité suffisante du gaz inerte (8) et comportant en tête un clapet d'évacuation (13) vers une colonne d'absorption (19) des gaz formés et une évacuation du liquide réactif vers un réacteur d'épuisement (14), ledit réacteur étant proportionné de façon qu'environ 90 % de la réaction de production de dioxyde de chlore soient réalisés dans ledit réacteur
- d'un réacteur d'épuisement (14)

- et d'au moins une colonne d'absorption dont la base est reliée audit réacteur et audit réacteur d'épuisement et qui comporte d'une part, une arrivée de l'eau d'absorption et un départ de gaz et, d'autre part une évacuation de la solution de dioxyde de chlore.

2. Dispositif selon la revendication 1 caractérisé en ce que ladite colonne d'épuisement est une colonne (19) du type noyée dont la base est reliée audit réacteur (1) et audit réacteur d'épuisement (14), qui comporte en son sommet une arrivée (20) d'eau d'absorption et un départ (21) de gaz et à sa base une évacuation (22) de la solution de dioxyde de chlore.

3. Dispositif selon la revendication 2, caractérisé en ce que ladite colonne (19) noyée comporte des grilles (23).

4. Dispositif selon l'une des revendications 1 à 3 caractérisé en ce que ladite recirculation de liquide sur le réacteur (1) est réalisée grâce à un tube de recirculation (3), ledit tube (3) comportant un dispositif de chauffage du liquide circulant.

5. Procédé de préparation de dioxyde de chlore utilisant le dispositif selon l'une des revendications 1 à 4, procédé dans lequel on effectue la réaction entre un chlorate alcalin et de l'acide chlorhydrique selon un procédé connu, caractérisé en ce que ladite réaction est effectuée, dans ledit réacteur à recirculation du liquide réactif, à une température comprise entre 60 et 80°C.

6. Procédé selon la revendication 5, caractérisé en ce que la réaction dans ledit réacteur à recirculation du liquide réactif est réalisée en présence d'un catalyseur.

7. Procédé selon la revendication 6, caractérisé en ce que ledit catalyseur est un bichromate alcalin, lequel est présent dans ledit réacteur à une concentration de préférence comprise entre 10 et 30 g/l.

**Patentansprüche**

1. Vorrichtung zur großtechnischen Herstellung von Chlordioxid aus einem Alkalichlorat durch Reaktion einer Säure und eines Reduktionsmittels unter Verdünnung des erhaltenen Dioxids mit einem Inertgas, gekennzeichnet durch
- einen Reaktor (1) zur Rezirkulation der Reaktionsflüssigkeit mit
- am Boden einer Zufuhr für überschüssiges Chlorat (6), Säure (7) und ein Reduktionsmittel, wobei diese verschiedenen Reaktionsteilnehmer durch Zufuhr in situ einer ausreichenden Menge an Inertgas (8) vermischt werden,
- oben einer Ablaßklappe (13) zu einer Absorptionssäule (19) für die gebildeten Gase und einem Ablaß der Reaktionsflüssigkeit zu einem Nachreaktor (14), wobei der Reaktor so ausgelegt ist, daß etwa 90 % der Reaktion zur Herstellung des Chlordioxids in dem Reaktor erfolgen,
- einen Nachreaktor (14) und
- mindestens eine Absorptionssäule, deren Boden mit dem Reaktor und dem Nachreaktor verbunden ist und die einerseits eine Zufuhr für das Absorptionswasser und einen Gasauslaß und andererseits einen Ablaß für die Chlordioxidlösung aufweist.

2. Vorrichtung nach Anspruch 1, dadurch gekennzeichnet, daß die sog. Nachreaktionssäule eine geflutete Säule (19) ist, deren Boden mit dem Reaktor (1) und dem Nachreaktor (14) verbunden ist, und die an ihrem Kopf eine Absorptionswaßserzufuhr (20) und einen Gasauslaß (21) und an ihrem Boden einen Auslaß (22) der Chlordioxidlösung aufweist.

3. Vorrichtung nach Anspruch 2, dadurch gekennzeichnet, daß die geflutete Säule (19) Gitter (23) aufweist.

4. Vorrichtung nach einem der Ansprüche 1-3, dadurch gekennzeichnet, daß die Rezirkulation der Flüssigkeit im Reaktor (1) mit einem Rezirkulationsrohr (3) durchgeführt wird, wobei das Rohr (3) eine Erhitzungsvorrichtung für die zirkulierende Flüssigkeit aufweist.

5. Verfahren zur Herstellung von Chlordioxid unter Verwendung der Vorrichtung nach einem der Ansprüche 1-4, durch an sich bekannte Reaktion eines Alkalichlorats und Chlorwasserstoffsäure, dadurch gekennzeichnet, daß die Reaktion in dem Reaktor zur Rezirkulation der Reaktionsflüssigkeit bei einer Temperatur von 60-80°C durchgeführt wird.

6. Verfahren nach Anspruch 5, dadurch gekennzeichnet, daß die Reaktion in dem Reaktor zur Rezirkulation der Reaktionsflüssigkeit in Gegenwart eines Katalysators durchgeführt wird.

7. Verfahren nach Anspruch 6, dadurch gekennzeichnet, daß als Katalysator ein Alkalibichromat in einer Menge im Reaktor von vorzugsweise zwischen 10 und 30 g/l verwendet wird.

**Claims**

1. Device for the industrial preparation of chlorine dioxide from an alkaline chlorate, by action of an acid and a reducing agent, comprising the dilution of the resulting dioxide with an inert gas, characterized in that it is constituted by :
- a reactor (1) with recirculation of the reactive liquid comprising at its base a unit supplying an excess of chlorate (6), acid (7) and reducing agent, said various reagents being subjected to a mixing by the supply in situ of a sufficient quantity of inert gas (8) and comprising at the front a valve (13) for discharging the formed gases towards an absorbing column (19) and an outlet for the reactive liquid towards an exhaustion reactor (14), said reactor being so proportioned that about 90 % of the chlorine dioxide production reaction is achieved in said reactor,

- an exhaustion reactor (14),

- and at least one absorption column, the base of which is connected to said reactor and to said exhaustion reactor, and which comprises, on the one hand, an absorption water intake and a gas outlet, and on the other hand, an outlet for the chlorine dioxide solution.

2. Device according to claim 1, characterized in that said exhaustion column is a column (19) of the embedded type, the base of which is connected to said reactor (1) and to said exhaustion reactor (14), and which comprises at its top an absorption water intake (20) and a gas outlet (21), and at its base an outlet (22) of the chlorine dioxide solution.

3. Device according to claim 2, characterized in that said embedded column (19) comprises grids (23).

4. Device according to any one of claims 1 to 3, characterized in that said recirculation of liquid on the reactor (1) is carried out by means of a recirculation tube (3), said tube (3) comprising a device for heating the circulating liquid.

5. Process for preparing chlorine dioxide in which the device according to any one of claims 1 to 4 is used, process in which the reaction of an alkaline chlorate with hydrochloric acid is achieved by a known process, characterized in that said reaction is carried out in said reactor with the recirculation of the reactive liquid, at a temperature comprised between 60 and 80°C.

6. Process according to claim 5, characterized in that the reaction in said reactor recirculating the reactive liquid is carried out in the presence of a catalyst.

7. Process according to claim 6, characterized in that said catalyst is an alkaline bichromate, which is present in said reactor at a concentration comprised between 10 and 30 g/litre.